# FASCICULE DE BREVET EUROPEEN

(11) **EP 0 669 225 B1**
(45) Date de publication et mention de la délivrance du brevet: **15.10.1997**
(21) Numéro de dépôt: 95400371.1
(22) Date de dépôt: 22.02.1995
(51) Int. Cl.: B60R 9/10

(54) **Porte-cycle et son dispositif de fixation d'un cycle**
Fahrradhalter und dessen Fahrrad-Befestigungseinrichtung
Bicycle-carrier and its bicycle retaining anchorage

(30) Priorité: 24.02.1994 FR 9402110
(43) Date de publication de la demande: 30.08.1995
(73) Titulaire: AUTOMAXI INDUSTRIES, S.A., F-35400 Saint Malo (FR)
(72) Inventeur: Fourel, Pascal, F-35400 Saint Malo (FR)
(74) Mandataire: Lepercque, Jean

(56) Documents cités:
- WO-A-90/02669
- DE-A- 3 912 692
- DE-U- 9 217 232
- US-A- 3 528 578

## Description

L'invention concerne un dispositif de fixation d'un cycle pour un porte-cycle et plus particulièrement pour un porte-cycle du type dit "debout". Dans un tel porte-cycle, le cycle est immobilisé en position verticale.

L'invention concerne également un porte-cycle comprenant un tel dispositif de fixation.

Dans le cadre de l'invention, le terme cycle doit être entendu dans son acceptation la plus générale : bicyclettes homme, dame ou enfant, vélos de course, vélos dits "tout terrain" ou V.T.T., cycles motorisés, etc..

Ces porte-cycles sont utilisés le plus souvent pour le transport de cycles sur le toit ou le coffre arrière de véhicules automobiles. On les dispose sur une galerie ou sur des barres fixées à ces véhicules.

Pour des raisons de simplicité, dans ce qui suit, le porte-cycle sera appelé "porte-vélo", qui en est la dénomination la plus couramment utilisée. De même, on appellera les différentes sortes de cycles "vélos".

De nombreux types de porte-vélo sont connus et proposés à la vente. Certains exigent le démontage des roues, mais le plus souvent, les moyens de fixation permettent d'éviter cette contrainte.

Les porte-vélos les plus anciens étaient agencés de telle sorte que les cycles étaient fixés par la selle et le guidon, les roues en l'air. La fixation des vélos était longue à réaliser et relativement complexe.

Depuis quelques années, se sont généralisés des porte-vélos permettant la fixation du vélo, verticalement également, mais dans sa position naturelle, c'est-à-dire les roues en bas.

Les porte-vélos de cette catégorie comprennent un ou plusieurs bras (en général deux). L'extrémité inférieure du ou des bras est fixée à un support et en général mobile en rotation autour d'un axe. La ou les extrémités supérieures sont munies d'un organe du type mâchoire, destiné à enserrer un tube du cadre du vélo.

Il existe plusieurs variantes de réalisation, les plus courantes étant les suivantes : grande pince, petites mâchoires articulées ou système à came.

En ce qui concerne les vélos eux-mêmes, l'offre tend à se diversifier pour répondre, notamment, à des besoins de plus en plus spécifiques. Il s'ensuit que la forme générale des cadres de vélos varie d'un type à l'autre ainsi d'ailleurs que les caractéristiques des tubes composant ces cadres. Entre autres, le diamètre des tubes, lorsqu'ils sont cylindriques, ou, de façon plus générale, leurs dimensions lorsqu'ils présentent une forme oblongue, varient très fortement d'un fabricant à l'autre, voire d'un type à l'autre, pour un même fabricant.

Un premier problème à résoudre est de pouvoir adapter les dispositifs de fixation des porte-vélos à ces différentes configurations. Il est clair que les modes de réalisations consistant à utiliser une grande pince ou une petite mâchoire ne peuvent gérer que de faibles variations de diamètres de tubes de section circulaire, autour d'une valeur moyenne. En réalité, le champ d'application concerne surtout les tubes de section circulaire de section faible, typiquement dans la gamme 30 - 60 mm. Compte-tenu par ailleurs que les tubes de section oblongue présentent généralement une faible résistance à la compression, il est clair également que ces modes de réalisations ne sont guère adaptés à ce type de tubes. Il y aurait en effet risque de déformation, sauf à utiliser des mâchoires ou pinces prévues pour une seule dimension de tube, c'est-à-dire épousant la section extérieure de celui-ci. Les systèmes à came offrent une plus grande souplesse et acceptent des tubes dont les diamètres varient dans des proportions plus importantes, ce au prix d'une complexité accrue. Ils permettent également, dans une certaine mesure, la fixation de tubes de section oblongue, le danger de déformation signalé n'étant pas pour autant écarté.

Une autre exigence souvent posée par l'utilisateur de tels dispositifs est de pouvoir accrocher le vélo sur le porte-vélo très rapidement et de façon simple. Les dispositifs de l'art connu, pour la plupart, requièrent un nombre de manipulations important. Il s'ensuit que la fixation du vélo sur le porte-vélo est souvent complexe et longue.

Enfin, il est nécessaire que le dispositif de fixation offre à l'utilisateur un niveau acceptable de sécurité contre le vol lorsque le vélo est fixé sur le porte-vélo. On entend par là que, sauf à utiliser un outillage spécifique : scie à métaux, cisailles, etc..., une personne mal intentionnée ne puisse dégager simplement et rapidement le vélo de son support.

L'invention se fixe pour but de pallier les inconvénients des dispositifs de l'art connu tout en satisfaisant simultanément les exigences précitées.

Pour ce faire, le dispositif de fixation selon l'invention comprend des premiers moyens fixés à demeure sur le cadre du vélo et munis d'un crochet. La fixation de ces moyens sur le cadre est obtenue simplement, dans un mode de réalisation préféré de l'invention, à l'aide de colliers réglables. Ces colliers sont ensuite enfermés dans un boîtier clos, par exemple à l'aide d'un capot encliquetable, pour les rendre inaccessibles de l'extérieur.

Ce boîtier sert également de support au crochet.

Le porte-vélo comprend un support et deux tubes formant fourches, articulés à leur base autour d'un axe. L'extrémité supérieure comprend des moyens de verrouillage destinés à recevoir le crochet. Ces moyens comprennent un verrou à ressort qui bloque le crochet lorsqu'il est engagé à l'intérieur de celui-ci.

L'ensemble est complété avantageusement par un système de serrure à clé qui permet de verrouiller définitivement le crochet à l'intérieur des moyens de verrouillage.

Dans un mode de réalisation préféré du porte-vélo selon l'invention, le support dont est muni le porte-vélo est lui aussi pourvu d'un crochet qui s'insère dans les moyens de verrouillage lorsque les deux tubes formant la fourche sont rabattus sur le support, c'est-à-dire en position non opérationnelle.

L'invention a donc pour objet un dispositif de fixation d'un cycle à cadre tubulaire pour un porte-cycle du type comprenant une structure porteuse destinée à soutenir le cadre du cycle en position debout, caractérisé en ce qu'il comprend des premiers moyens de fixation solidaires dudit cadre et comprenant au moins un crochet et des seconds moyens de fixation solidaires du porte-cycle et comprenant un verrou à ressort coopérant avec ledit crochet de manière à obtenir un verrouillage temporaire de premiers et seconds moyens de fixation lorsque celui-ci est enclenché dans les seconds moyens de fixation.

L'invention a encore pour objet un porte-cycle comprenant un tel dispositif de fixation.

Le dispositif de fixation selon l'invention remplit donc bien les buts fixés. Il permet, tout à la fois, la gestion de tubes de dimensions et de formes très variées et une fixation quasi-instantannée : simple encliquetage d'un crochet. En réalité, la géométrie du cadre n'intervient pratiquement pas. La pose et le réglage de la partie des moyens de fixations supportant le crochet sont réalisés une fois pour toutes. En outre, l'opération de fixation (encliquetage du crochet) ne mobilise qu'une seule main, l'autre main restant libre pour tenir le vélo.

En outre, on peut munir simplement le dispositif de verrouillage d'un antivol classique ce qui offre une sécurité suffisante dans la majorité des cas.

L'invention sera mieux comprise et d'autres caractéristiques et avantages apparaîtront à la lecture de la description qui suit en référence aux figures annexées, et parmi lesquelles :
- La figure 1 est une vue d'ensemble d'un porte-vélo et du dispositif de fixation réalisé selon un mode préféré de l'invention;
- La figure 2 est une figure illustrant de façon plus détaillée le dispositif de fixation selon l'invention;
- Les figures 3a à 3c illustrent un exemple des premiers moyens de fixation, solidaires du cadre du vélo, vue de côté, de dessus et de face, respectivement; la figure 3c illustrant plus particulièrement le mode de fixation de la platine au cadre;
- Les figures 4a, 4b et 4c illustrent un exemple de réalisation du crochet utilisé par ces premiers moyens de fixation;
- La figure 5 illustre un exemple de réalisation d'une des pièces constitutives d'un boîtier, constituant un des éléments des seconds moyens de fixation;
- Les figures 6a et 6b illustrent un exemple de réalisation d'un verrou à ressort utilisé par les seconds moyens de fixation, en perspective et en vue de côté.

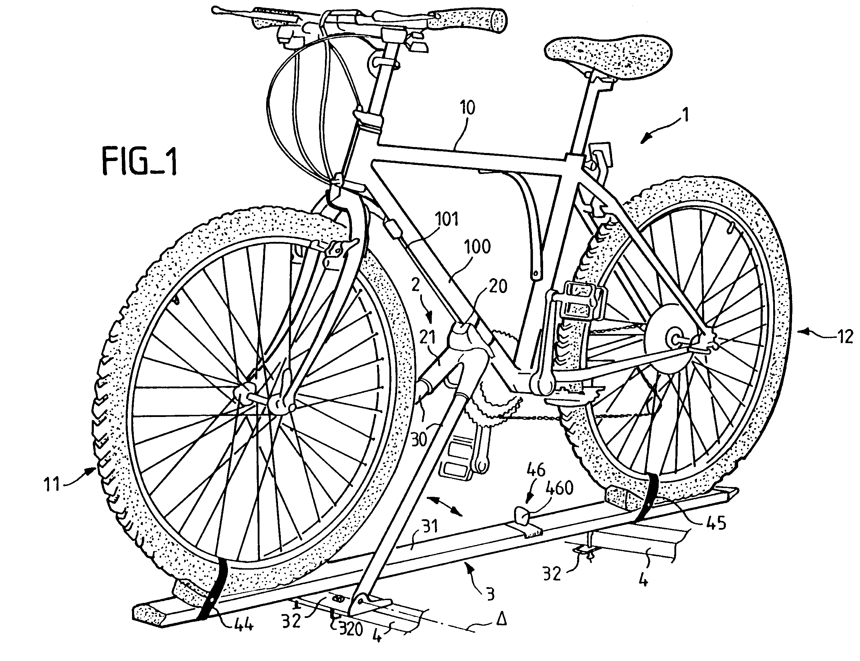

La figure 1 est une vue d'ensemble illustrant un porte-vélo 3 comprenant un dispositif de fixation d'un mode préféré de réalisation selon 'invention. Sans que cela soit limitatif en quoi que ce soit de la portée de l'invention, il est supposé, dans l'exemple illustré, que le vélo 1 à disposer sur le porte-vélo 3 est du type V.T.T. La configuration du porte-vélo, en soi, diffère peu de celle des porte-vélos de l'art connu. Le porte-vélo 3 comprend de façon classique un support se présentant généralement sous la forme d'une poutre allongée 31. Les roues avant 11 et arrière 12 du vélo 1 sont posées sur cette poutre 31. On prévoit des tubes 30 formant fourche destinés à soutenir le cadre 10 à l'aide d'un dispositif de fixation 2. Les roues 11 et 12 sont en outre attachées à l'aide d'un système classique à sangles ou par des organes similaires, respectivement 44 et 45. Ces sangles sont rendues solidaires de la poutre 31 par tout moyen approprié. Les tubes sont mobiles en rotation autour d'un axe Δ orthogonal à la plus grande dimension de la poutre 31. De façon plus précise, comme illustré par la figure 1, une platine 42 est rendue solidaire de la poutre 31 dans une zone située avantageusement vers l'avant de celle-ci. En position opérationnelle, la fourche, constituée des deux tubes 30, est en position haute, de manière à ce que le tube inférieur 100 du cadre 10 du vélo 1 soit mis en contact avec le dispositif de fixation 2. La fourche peut être rabattue sur la poutre 31 (position de "repos") lorsque le vélo 1 ne repose pas dans le porte-vélo 3.

Le plus souvent un porte-vélo 1 de ce type est destiné au transport de vélo sur le toit ou le coffre arrière d'un véhicule automobile. Pour ce faire, on le fixe sur une galerie ou une paire de barres 4, comme illustré sur la figure 1. Des moyens classiques de fixation démontables à vis sont prévus : dans l'exemple illustré, des moyens 320 solidaires de la platine 32, à l'avant de la poutre 31, et des moyens 33 solidaires de la poutre 31, sur sa partie arrière.

Comme il a été indiqué, les dispositifs de fixation de l'art connu sont à base de pinces, mâchoires ou organes similaires. On réalise aisément que, en fonction de la configuration du cadre 10, c'est-à-dire de sa forme; de la section du tube 100, s'il est de section circulaire; ou plus généralement des dimensions associées à sa section, s'il est de forme oblongue, il sera nécessaire de procéder à des réglages qui peuvent s'avérer longs et complexes. D'autre part, un dispositif de fixation donné ne pourra accepter qu'une gamme restreinte de dimensions et de formes de tubes 100.

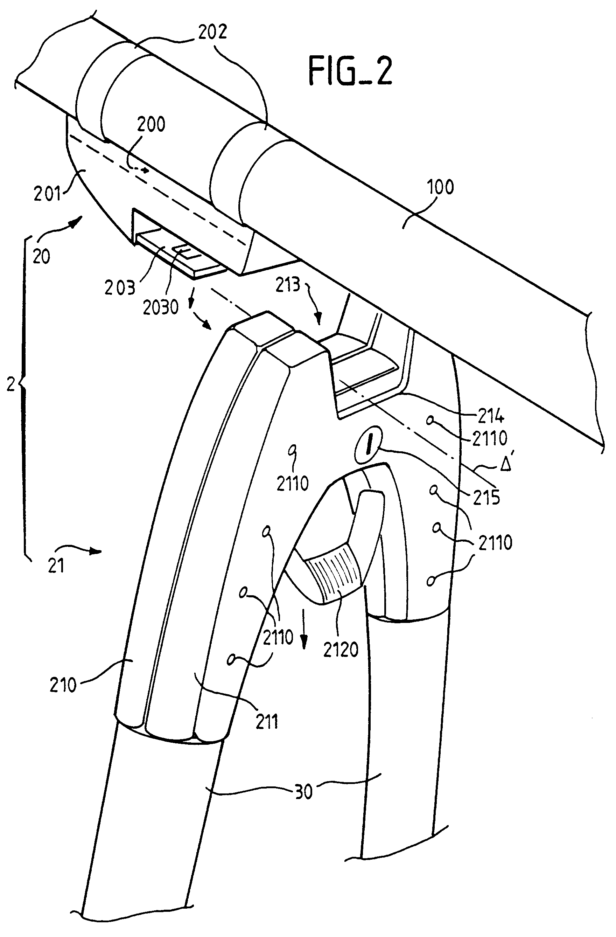

L'invention prévoit un dispositif de fixation 2 palliant cet inconvénient. Ce dispositif est décrit de façon plus détaillée par référence à la figure 2. Il comprend essentiellement deux parties.

Une première partie, 20, est rendue solidaire du tube 100 du vélo 1. Celle-ci reste à demeure sur ce tube 100. Cette partie sera détaillée ultérieurement : elle comprend une platine 200 attachée, dans un mode de réalisation préféré de l'invention, par de simples colliers réglables 202 entourant le tube 100. De tels colliers sont disponibles dans le commerce sous diverses dénominations commerciales : ils comportent le plus souvent un corps constitué par une languette crantée, au moins sur son extrémité, et une vis de serrage permettant de régler le diamètre de la section interne du collier et la tension. On monte un capot 201 sur la platine 200, par exemple par encliquetage. Ce capot 201 cache les éléments de réglage permettant le serrage des colliers, par exemples des vis, et les rend inaccessibles de l'extérieur. Enfin, selon une caractéristique importante de l'invention, il est prévu un crochet 203. Dans l'exemple illustré, la partie visible de celui-ci (à l'extérieur du boîtier 200-201) prend la forme d'une lame plate, comprenant un orifice central 2030, parallèle au tube 100. Ce crochet, comme il le sera détaillé ci-après, va coopérer avec la seconde partie, 21, du dispositif de fixation 2.

Cette seconde partie comprend essentiellement un boîtier constitué de deux coques 210 et 211, assemblées à leurs bases autour des tubes 30. On prévoit naturellement des moyens de fixation classiques 2110 des coques 210 et 211 entre elles (collage, rivets, etc...), d'une part, et des coques 210 et 211 aux tubes 30, d'autre part. La partie supérieure de cet assemblage comporte un passage libre 213 en forme de berceau destiné à recevoir le capot 201 de la première partie 20 du dispositif de fixation. A l'intérieur des coques 211 et 212, dans la partie supérieure de celles-ci, on dispose un verrou à ressort (non visible sur cette figure). On prévoit également un canal 214 transperçant de part en part l'assemblage suivant une direction Δ' sensiblement parallèle au tube 100 et dans lequel peut s'enfiler le crochet 203. Une fois introduit entièrement dans ce canal 214, le crochet est verrouillé par le verrou à ressort. Une tirette ou anneau 2120, disposé sous les coques 210 et 211, à l'intérieur de la fourche formée par les tubes 30 sert à déverrouiller le verrou à ressort. Seule cette partie du verrou à ressort est accessible de l'extérieur du boîtier formé par les deux coques. En raison de sa position, l'anneau 2120 est donc facilement accessible, même si le vélo 1 est placé sur le porte-vélo 3. On peut avantageusement compléter l'ensemble par une serrure à clé 215, bloquant le verrou à ressort et servant d'antivol.

La pose de l'organe 20 nécessite naturellement un réglage. Il est nécessaire notamment de le positionner à un endroit approprié du tube 100. Il faut ensuite serrer les colliers 202 et procéder à la pose du capot 201. Cependant, il doit être clair que ces opérations de montage, peu complexes et qui ne nécessitent qu'un outillage restreint (tournevis par exemple), ne sont exécutées, a priori, qu'une seule fois. En outre, cet outillage (non représenté) peut être fourni avec le dispositif de fixation et être intégré dans le capot 201. Ensuite, la partie 2 du dispositif de fixation, munie de son crochet 203, reste à demeure sur le vélo. Le verrouillage sur le porte-vélo s'effectue, comme il a été indiqué, de façon très simple et quasi-instantanément : introduction du crochet 203 dans le canal 214 et verrouillage par une simple poussée suivant un axe Δ' parallèle au tube 100. De façon plus précise, cette poussée est obtenue en basculant vers le haut la fourche constituée par les tubes 30, c'est-à-dire autour de l'axe Δ (figure 1). Une seule main est nécessaire pour exécuter la manoeuvre, l'autre restant libre pour soutenir le vélo 1.

Enfin, dans une variante de réalisation préférée de l'invention, on munit le dispositif de fixation d'un antivol à clé 215, comme illustré sur la figure 2. On peut donc bloquer de façon définitive le verrouillage.

Le dégagement du vélo 1 du porte-vélo est une opération tout aussi simple à réaliser : après avoir déverrouillé, le cas échéant, l'antivol 215 à l'aide de la clé prévue à cet effet, il suffit d'exercer une traction, vers le bas, sur la tirette 212. Cette action déverrouille le verrou à ressort bloquant le crochet 203, comme il le sera décrit ci-après.

Il est naturellement nécessaire, comme dans le cas des porte-vélos de l'art connu, de détacher au auparavant les brides 44 et 45, ou organes de fixation similaires, qui emprisonnent les roues et les retiennent sur la poutre 31 (figure 1) du porte-vélo 3.

Le vélo étant dégagé, on peut rabattre la fourche constituée par les tubes 30 sur la poutre 31. De façon avantageuse, comme illustré sur la figure 1, on prévoit un organe 46 constitué d'un crochet similaire au crochet 203. Celui-ci comportant également un orifice central 460 dont l'utilité apparaîtra ci-après. Lorsque l'on rabat les tubes 30 et le dispositif de fixation 2 supporté par celles-ci, le crochet 46 va s'insérer dans la fente 214, du côté opposé au côté d'insertion du crochet 203 en position opérationnelle. Il s'ensuit que la fourche constituée par les tubes 30 va rester verrouillée dans cette position. Pour la déverrouiller, il suffit, comme précédemment; d'exercer une force de traction sur la tirette 212.

On va maintenant décrire de façon plus détaillée un exemple de réalisation concrète, parmi d'autre, des différents éléments constitutifs des deux parties, 20 et 21, du dispositif de fixation 2 selon l'invention.

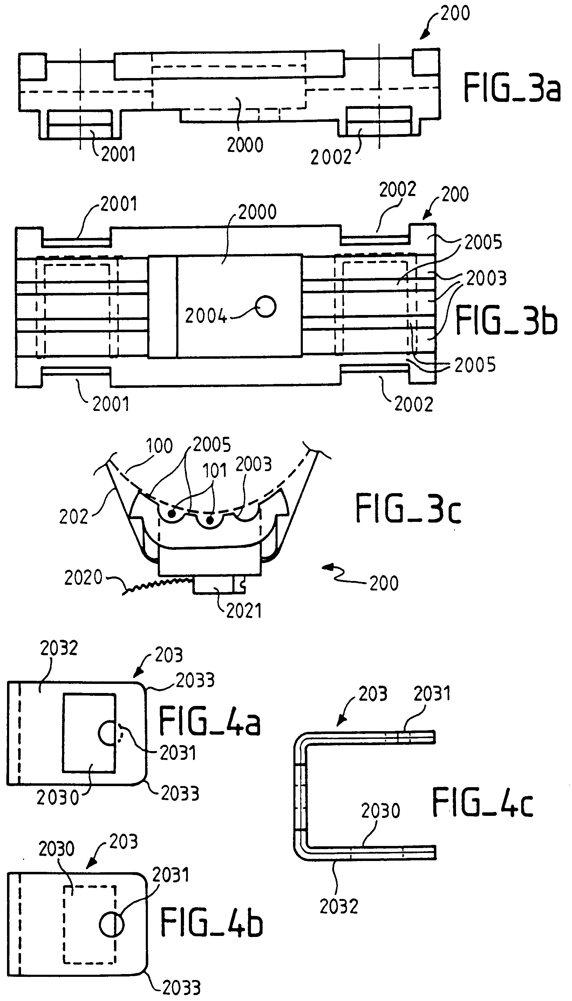

Les figures 3a à 3c illustrent un exemple de réalisation de la platine 200, respectivement vue de coté, de dessous et de face. Celle-ci comprend un corps 2000 dont la paroi 2005, destinée à être mise en contact avec le tube 100 du cadre 10 du vélo 1, s'inscrit dans une portion de cylindre de manière à épouser au mieux les formes courbes de ce tube 100. Dans un mode de réalisation préféré de l'invention, on munit cette paroi 2005 de rainures longitudinales 2003. Trois rainures ont été représentées sur les figures 3b et 3c, ce à titre d'exemple uniquement. Elles sont destinées à laisser un passage libre pour les câbles de freins ou de changement de vitesse : deux câbles, sous la référence 101, sont représentés sur la figure 3c. Ces rainures seront avantageusement dotées d'une section cylindrique pour épouser au mieux la section extérieure câbles ou des gaines de câbles. Le corps de la platine 2000 est muni d'encoches latérales 2001 et 2002 permettant le passage des colliers 202. Ceux-ci entourent le tube 100 (en pointillés sur la figure 3c). On dispose l'élément de serrage 2026 du côté opposé à la face 2005 en contact avec la surface du tube 100. Il s'agit en général d'un élément comprenant une vis de réglage du serrage actionnable par un tournevis. La vis s'engrène dans des crans 2020 réalisés dans une zone terminale des colliers. Ces dispositions permettent tout à la fois un maintien ferme de la platine 2000 contre le tube et une adaptation à différentes dimensions de tubes et/ou à des formes différentes (sections circulaires ou oblongues). Du fait que la platine peut être réalisée en matériau présentant une certaine plasticité et que la force de pression, exercée par le collier, est répartie de façon homogène, les risques d'écrasement ou de déformation du tube 100 sont réduits au minimum, même si celui-ci a une forme très aplatie.

Les figures 4a à 4c illustre un exemple de réalisation d'un crochet utilisable dans le cadre de l'invention, respectivement en vue de dessous, de haut et de côté. Comme le montre très clairement la figure 4c, le crochet 203 a la forme générale d'un "U" renversé. Sur la partie inférieure, branche 2032 du "U", il comporte un évidement central 2030. Il comporte également, sur la partie supérieure, un orifice circulaire 2031, dans l'exemple illustré. Cette disposition permet de le fixer sur la platine 200, par clipsage, par exemple. Pour ce faire, celle-ci comporte un téton 2004 (figure 3b) dans une zone centrale.

Une fois réalisé, le montage de la platine 2000, munie de son crochet, on dispose sur celle-ci un capot 201 (figure 2) ne laissant visible et accessible que la branche 2032 du "U", branche comportant l'évidement central, comme illustré plus clairement par la figure 2. Le capot 201 peut être posé par encliquetage, par exemple, ou tout autre moyen classique. Il rend inaccessible de l'extérieur les éléments de serrage 2021 (figure3c). Les coins 2033 de la branche 2032 peuvent être arrondis pour favoriser l'introduction du crochet à l'intérieur de la fente 214 (figure 2).

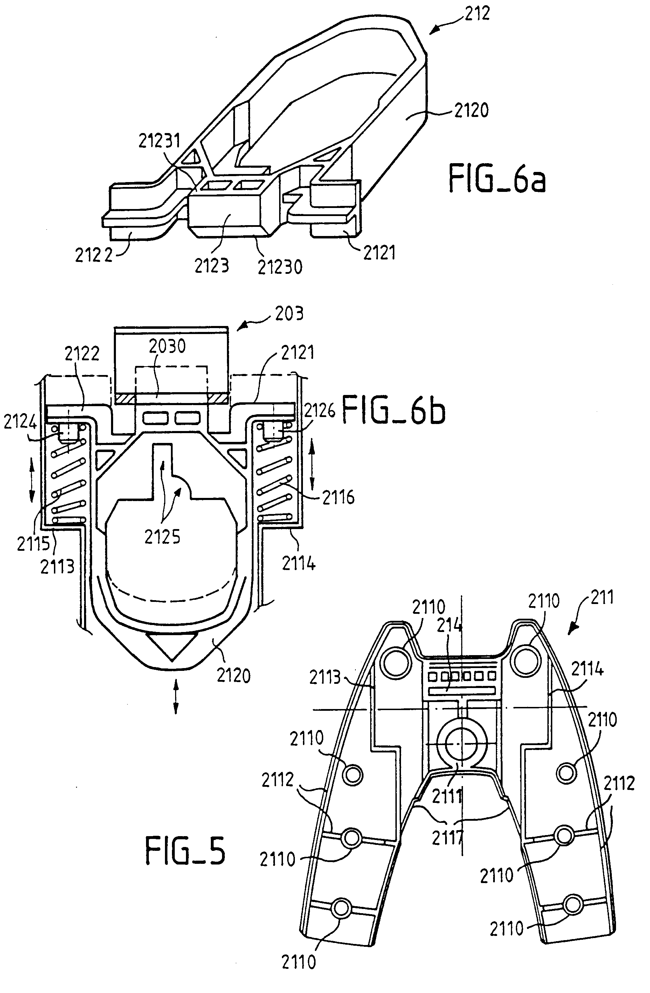

La seconde partie 21 du dispositif de verrouillage 2, solidaire de la fourche constituée par les tubes 30, va maintenant âtre décrite de façon plus détaillée par référence aux figures 5, 6a et 6b.

On a représenté sur la figure 5, un exemple de réalisation possible d'une des coquilles 210 ou 211. On supposera ici qu'il s'agit de la coquille 211. De façon avantageuse, les coquilles sont munies d'un détrompeur de façon à ce que le crochet soit introduit d'un seul sens. Un orifice supplémentaire 2111 est prévu pour laisser le passage à la serrure à clé 215 (figure 2). Cet orifice est réalisé dans la partie supérieure de la coque 211, mais en dessous de la fente 114. Enfin, on prévoit des orifices 2117, tournés vers le bas, pour laisser le libre passage aux branches de l'anneau 2120 actionnant le verrou à ressorts.

L'intérieur de chaque coque est muni avantageusement de nervures, 2110, 2113 et 2114, permettant le renforcement de la structure de l'ensemble. Les deux dernières nervures, 2113 et 2114,jouent en outre un rôle particulier, car elles supportent aussi les ressorts du verrou à ressort comme explicité ci-après.

La figure 6a illustre, en perspective, un exemple de réalisation possible du verrou à ressort 212 et de son anneau de déverrouillage 2120. Ce dernier est la seule partie du verrou 212 visible de l'extérieur des coques 210 et 211, comme le montre plus clairement la figure 2. Le corps du verrou comporte deux ailes 2121 et 2122, dont la partie inférieure (sur la figure 6b) est munie de picots, 2124 et 2126. Chaque picot est enfoncé à l'intérieur d'un ressort hélicoïdal, 2115 et 2116 respectivement. La partie inférieure de ces ressorts, 2115 et 2116, repose sur les nervures 2113 et 2114 de la coque 211 (figure 5) qui forment un support pour ceux-ci. La partie centrale 2123 du verrou est proéminente et fait fonction de pêne. Celle-ci comporte une zone frontale biseautée 21230. Lorsque l'on introduit le crochet 203 dans la fente 114 (figure 2), cette dernière va appuyer sur cette zone biseautée 21230 et repousser le verrou 212 vers le bas. Les ailes 2121 et 2122 vont compresser les ressorts 2114 et 2115. La figure 6b représente, en trait plein, la position occupée par le verrou 212 lors de l'introduction partielle du crochet 203 dans la fente 114 (figure 2). Ensuite, le pêne 2123 va s'engager dans l'orifice central 2030 du crochet 203 et le verrou 2112 va remonter sous l'action des ressorts 2114 et 2115 qui reprennent leur position de repos. On a schématisé cette position, sur la figure 6b, par des traits pointillés. Dans cette position, le crochet 203 est prisonnier du pêne 2123, car retenu par une paroi abrupte 21231, paroi opposée à la zone biseautée 21230.

Lorsque l'on désire déverrouiller le verrou 212, il suffit de tirer sur l'anneau 2120, ce qui a pour effet de compresser le ressort et de libérer le crochet 203 que l'on peut alors retirer de la fente 114.

Dans une variante de réalisation préférée de l'invention, le verrou à ressort 212 est complété par un antivol à clé (figure 2 : 215). On prévoit des découpes appropriées 2125 dans le corps du verrou 212, découpes servant de gâche pour le pêne (non représenté) de l'antivol. Cette action a pour effet d'interdire le fonctionnement effectif de l'anneau de déverrouillage 2120, en bloquant le corps du verrou 212 dans la position verrouillée.

D'après la description qui précède, on réalise que l'invention atteint bien les buts qu'elle s'est fixée et, ce, de façon simultanée : fixation adaptée à toutes sortes de vélos, fixation quasi-instantanée et verrouillage antivol.

Pour fixer les idées, et sans que cela soit limitatif en quoique ce soit de l'invention, on va maintenant indiquer quelques exemples de matériaux utilisables pour les principaux composants du dispositif de fixation et du porte-vélo.

Le crochet 203 sera réalisé de façon préférentielle en acier inoxydable et le crochet 46 (lorsque ce dernier existe) en matériau plastique. Les autres pièces du dispositif de fixation : coquille 210, 211; verrou 212; platine 200 et son capot 201; seront réalisées en matériau plastique classique, tel que le polyamide. Pour attacher la platine 200 à un tube du cadre du vélo, comme il a été indiqué, on peut utiliser des colliers classiques à réglage par vis, disponibles dans le commerce. Les ressorts 2113 et 2114 sont des ressorts classiques en acier. Les tubes 30 de la fourche du porte-vélo 3 ainsi que la poutre porteuse 31 peuvent être réalisé en acier, en aluminium ou en alliage d'aluminium.

En ce qui concerne la platine 200, le rayon de courbure de la paroi 2005, en vis à vis avec le tube 100, est typiquement de l'ordre de 30 mm. Les rainures 2003 sont de demi-cylindres de rayon typique 3 mm.

Il doit être clair cependant que l'invention n'est pas limitée aux seuls exemples de réalisations précisément décrits, notamment en relation avec les figures 1 à 6b.

Notamment, bien que l'on ait indiqué dans ces exemples de réalisation que le dispositif de fixation était constitué de deux parties, l'une solidaire du porte-vélo, l'autre installée, lors d'une opération de montage préliminaire, sur le cadre du vélo, dans une variante de réalisation (non représentée), on peut concevoir des vélos dont le cadre comporte d'origine un crochet, réglable ou non en position, vissé ou soudé par exemple. Naturellement, ces vélos seraient conçus pour un type donné de porte-vélo selon l'invention, notamment s'il n'est pas possible de régler la position du crochet. Dans cette configuration, la première partie du dispositif de fixation est réduite à son strict minimum, c'est à dire à une pièce de métal, fixe ou mobile, partie intégrante du cadre du vélo.

En outre, comme il a été indiqué, la fourche constituée de deux tubes 30 peut se mouvoir dans l'espace par rotation autour d'un axe Δ perpendiculaire à la plus grande longueur du porte-vélo. Cette disposition permet une adaptation à la majorité des cas, en admettant que la première partie (figures 1 et 12 : 20) du dispositif de fixation ait été correctement positionnée sur le tube inférieur du cadre du vélo. On peut cependant améliorer les capacités de réglage, au prix d'une conception plus complexe de la fourche, en réalisant les tubes en deux parties pouvant coulisser l'une dans l'autre, de manière à ce que l'on puisse allonger ou diminuer la longueur de la fourche dans une gamme déterminée. Il doit être clair, que, pour un vélo donné, cette opération, dans la mesure où elle est nécessaire, ne doit être effectuée qu'une seule fois, tout comme le positionnement initial de la première partie du dispositif de fixation.

On peut aussi remplacer les ressorts hélicoïdaux par tous moyens élastiques permettant d'exercer une force de rappel sur le corps du verrou à ressort : ressorts à lames, etc.

On peut également utiliser des colliers en nombre différent de deux. Bien que cette dernière configuration soit particulièrement bien adaptée, car elle permet de fixer la platine dans des zones situées de part et d'autre du point d'attache, central, du crochet, il est toutefois possible de procéder autrement. On pourrait, par exemple, n'utiliser qu'un seul collier, de grande largeur, et fixer le crochet à une extrémité de la platine.

Enfin, la fourche à laquelle est fixée la seconde partie du dispositif de fixation du vélo (figures 1 et 2 : 21) pourrait tout aussi bien être remplacée par un simple bras ou tout autre structure porteuse appropriée, ce sans sortir du cadre de l'invention.

## Revendications

1. Dispositif de fixation d'un cycle (1) à cadre tubulaire (10) pour un porte-cycle (3) du type comprenant une structure porteuse (30) destinée à soutenir le cadre (10) du cycle (1) en position debout, caractérisé en ce qu'il comprend des premiers moyens de fixation (20) solidaires dudit cadre (10) et comprenant au moins un crochet (203) et des seconds moyens de fixation (21) solidaires du porte-cycle (3, 30) et comprenant un verrou à ressort (212) coopérant avec ledit crochet (203) de manière à obtenir un verrouillage temporaire des premiers (20) et seconds (21) moyens de fixation lorsque le crochet (203) est enclenché dans les seconds moyens de fixation (21).

2. Dispositif de fixation selon la revendication 1, caractérisé en ce que lesdits premiers moyens de fixation (20) sont réglables en position de manière à pouvoir être attachés dans une zone déterminée dudit cadre (10) du cycle (1).

3. Dispositif selon la revendication 2, caractérisé en ce que le crochet (203) est fixé sur une platine support (200) et en ce que cette platine support (200) comprend des moyens de serrage amovibles (202) permettant de l'attacher audit cadre (10, 100) du cycle (1).

4. Dispositif de fixation selon la revendication 3, caractérisé en ce que lesdits moyens de serrage amovibles sont constitués d'au moins un collier réglable (202) en tension entourant ladite platine support (200) et un élément tubulaire (100) dudit cadre (10), de manière à fixer la platine support (200) dans ladite zone déterminée.

5. Dispositif selon l'une des revendications 3 ou 4, caractérisé en ce que lesdits premiers moyens de fixation comportent en outre un capot (201) recouvrant ladite platine support (200) et lesdits moyens de serrage amovibles (202).

6. Dispositif selon la revendication 3, caractérisé en ce que ladite platine support (200) comporte des canaux longitudinaux (2003), creusés sur une paroi (2005) en vis à vis avec la zone déterminée d'attache sur le cadre (10) de manière à laisser le libre passage à des gaines de câbles (101) actionnant des organes fonctionnels dudit cycle (1) et en ce que cette paroi (2005) est inscrite dans une portion de cylindre de rayon déterminé.

7. Dispositif selon la revendication 1, caractérisé en ce que lesdits seconds moyens comprennent un boîtier constitué de deux coques creuses (210, 211) enfermant ledit verrou à ressort (212), laissant accessible de l'extérieur un anneau (2120) de déverrouillage dudit verrou (212), et en ce que ces coques sont munies d'une fente (114) dans laquelle peut s'insérer ledit crochet (203).

8. Dispositif selon la revendication 7, caractérisé en ce que ledit crochet (203) est constitué d'au moins une pièce plate (2032) comprenant un évidement dans une zone centrale (2030), en ce que ledit verrou à ressort (212) comprend une proéminence centrale (2123) munie d'une zone frontale biseautée (21230) et de deux ailes latérales (2122, 2123) reposant sur une extrémité de moyens élastiques (2115, 2116) dont l'autre extrémité repose sur des supports (2113, 2114) solidaires dudit boîtier, en ce que le crochet (203) appuie sur cette zone biseautée (21230) lors de l'enclenchement desdits premiers (20) et seconds (20) moyens de fixation de manière à occasionner, dans un premier temps, l'enfoncement de la zone centrale proéminente (2123) et la compression des moyens élastiques (2124, 2126) et, dans un deuxième temps, le verrouillage dudit crochet (203) à l'intérieur des seconds moyens de fixation (21) par l'introduction de la proéminence centrale (2123) dans ledit évidement central (2030), le verrou à ressort (212) étant repoussé par les moyens élastiques (2124, 2126).

9. Dispositif de fixation selon la revendication 8, caractérisé en ce que lesdits moyens élastiques sont constitués de ressorts hélicoïdaux (2124, 2126) et en ce que lesdits supports solidaires du boîtier sont constitués par des nervures (2113 et 2114) réalisées à l'intérieur des dites coques (210, 211) constituant le boîtier.

10. Dispositif de fixation selon la revendication 1, caractérisé en ce que lesdits seconds moyens de fixation (21) comprennent un antivol à clé (215) bloquant ledit verrou à ressort (212).

11. Porte-cycle (3) caractérisé en ce qu'il comprend un dispositif de fixation (2) selon l'une quelconque des revendications 1 à 10.

12. Porte-cycle (3) selon la revendication 11, caractérisé en ce qu'il comprend un élément support allongé (31) en forme de poutre sur lequel repose ledit cycle (1), en ce que ladite structure porteuse est constituée de deux tubes (30) formant fourche supportant, en une extrémité, lesdits seconds moyens de fixation (21) et mobile, en son autre extrémité, autour d'un axe (Δ) orthogonal à la plus grande dimension dudit élément allongé (31), et en ce que ce que ledit élément allongé comporte un second crochet (46) sur lequel vient s'enclencher ledit verrou à ressort (212) lorsque la fourche est rabattue sur l'élément allongé (31), ce second crochet comprenant un évidement central (460).

## Claims

1. Device for retaining a bicycle (1) with a tubular frame (10) for a bicycle carrier (3) of the type comprising a carrying structure (30) intended to support the frame (10) of the bicycle (1) in the upright position, characterized in that it comprises first retaining means (20) secured to the said frame (10) and comprising at least one hook (203) and second retaining means (21) secured to the bicycle carrier (3, 30) and comprising a spring catch (212) interacting with the said hook (203) in order temporarily to lock the said first (20) and second (21) retaining means together when the hook (203) is engaged in the second retaining means (21).

2. Retaining device according to Claim 1, characterized in that the position of the said first retaining means (20) can be adjusted in such a way that they can be attached to a given region of the said frame (10) of the bicycle (1).

3. Device according to Claim 2, characterized in that the hook (203) is fixed on a mounting plate (200) and in that this mounting plate (200) comprises removable clamping means (202) allowing it to be attached to the said frame (10, 100) of the bicycle (1).

4. Retaining device according to Claim 3, characterized in that the said removable clamping means consist of at least one band (202) the tension of which can be adjusted, surrounding the said mounting plate (200) and a tubular element (100) of the said frame (10) so as to retain the mounting plate (200) in the said given region.

5. Device according to one of Claims 3 and 4, characterized in that the said first retaining means also include a cap (201) covering the said mounting plate (200) and the said removable clamping means (202).

6. Device according to Claim 3, characterized in that the said mounting plate (200) has longitudinal channels (2003) cut in a wall (2005) opposite the given area for attachment to the frame (10) so as to leave a space for the sheaths of the cables (101) operating the functional members of the said bicycle (1) to pass through, and in that this wall (2005) lies within a portion of a cylinder of given radius.

7. Device according to Claim 1, characterized in that the said second means comprise a casing consisting of two hollow shells (210, 211) enclosing the said spring catch (212), leaving accessible from the outside a ring (2120) for unlocking the said catch (212), and in that these shells have a slot (114) in which the said hook (203) can be inserted.

8. Device according to Claim 7, characterized in that the said hook (203) consists of at least one flat component (2032) comprising a recess in a central region (2030), in that the said spring catch (212) comprises a central projection (2123) equipped with a bevelled front region (21230) and with two lateral wings (2122, 2123) resting on one end of elastic means (2115, 2116) the other end of which rests on supports (2113, 2114) integral with the said casing, in that the hook (203) rests on this bevelled region (21230) when the first (20) and second (21) retaining means are engaged so as first of all to push in the projecting central region (2123) and compress the elastic means (2124, 2126), and then lock the said hook (203) inside the second retaining means (21) by the introduction of the central projection (2123) into the said central recess (2030), the spring catch (212) being pushed back by the elastic means (2124, 2126).

9. Retaining device according to Claim 8, characterized in that the said elastic means consist of helical springs (2124, 2126) and in that the said supports integral with the casing consist of ribs (2113 and 2114) formed on the inside of the said shells (210, 211) forming the casing.

10. Retaining device according to Claim 1, characterized in that the said second retaining means (21) comprise a key-operated anti-theft device (215) immobilizing the said spring catch (212).

11. Bicycle carrier (3) characterized in that it comprises a retaining device (2) according to any one of Claims 1 to 10.

12. Bicycle carrier (3) according to Claim 11, characterized in that it comprises an elongate support element (31) in the shape of a beam upon which the said bicycle (1) rests, in that the said carrying structure consists of two tubes (30) forming a fork supporting, at one end, the said second retaining means (21) and able to move, at its other end, about an axis (Λ) orthogonal to the longest dimension of the said elongate element (31), and in that the said elongate element includes a second hook (46) over which the said spring catch (212) is engaged when the fork is folded down onto the elongate element (31), this second hook comprising a central recess (460).

## Patentansprüche

1. Vorrichtung zur Befestigung eines Rades (1) mit rohrförmigem Rahmen (10) an einem Radhalter (3) nach Art einer Tragestruktur (30), die dazu bestimmt ist, den Rahmen (10) des Rades (1) in aufrechter Position zu halten, dadurch gekennzeichnet, daß sie erste, mit dem Rahmen (10) fest verbundene Befestigungseinrichtungen (20) aufweist, und sie zumindest einen Haken (203) und zweite, mit dem Radhalter (3, 30) fest verbundene Befestigungseinrichtungen aufweist, und sie einen Federriegel (212) aufweist, der mit dem Haken (203) derart zusammenwirkt, daß eine vorübergehende Verriegelung der ersten (20) und zweiten (21) Befestigungseinrichtungen erreicht wird, wenn der Haken (203) in den zweiten Befestigungseinrichtungen (21) verriegelt wird.

2. Befestigungsvorrichtung gemäß Anspruch 1, dadurch gekennzeichnet, daß die ersten Befestigungseinrichtungen (20) in ihrer Position derart einstellbar sind, daß sie in einem bestimmten Bereich des Rahmens (10) des Rades (1) angebracht werden können.

3. Vorrichtung gemäß Anspruch 2, dadurch gekennzeichnet, daß der Haken (203) auf einer Tragplatte (200) befestigt wird, und daß diese Tragplatte (200) abnehmbare Festspanneinrichtungen (202) aufweist, die ermöglichen, sie an dem Rahmen (10, 100) des Rades (1) zu befestigen.

4. Befestigungsvorrichtung gemäß Anspruch 3, dadurch gekennzeichnet, daß die abnehmbaren Festspanneinrichtungen von zumindest einem in Spannung einstellbaren Ring (202), der die Tragplatte (200) umgibt, und einem rohrförmigen Element (100) des Rahmens (10) derart gebildet sind, daß die Tragplatte (200) in dem bestimmten Bereich befestigt werden kann.

5. Vorrichtung gemäß einem der Ansprüche 3 oder 4, dadurch gekennzeichnet, daß die ersten Befestigungseinrichtungen außerdem eine Haube (201) aufweisen, die die Tragplatte (200) und die abnehmbaren Festspanneinrichtungen (202) abdeckt.

6. Vorrichtung gemäß Anspruch 3, dadurch gekennzeichnet, daß die Tragplatte (200) längliche Kanäle (2003) aufweist, die auf einer Wand (2005) gegenüber des bestimmten Befestigungsbereiches auf dem Rahmen (10) derart ausgehöhlt sind, daß sie den freien Durchgang für die Kabelschläuche (101) lassen, die die funktionellen Organe des Rades (1) antreiben, und daß diese Wand (2005) einen zylindrischen Bereich mit bestimmten Radius einnimmt.

7. Vorrichtung gemäß Anspruch 1, dadurch gekennzeichnet daß die zweiten Einrichtungen ein Gehäuse aufweisen, das aus zwei hohen Schalen (210, 211) gebildet ist, die den Federriegel (212) einschließen, wobei sie einen Ring (2120) zur Entriegelung des Riegels (212) von außen zugänglich lassen, und daß diese Schalen mit einer Spalte (114) ausgestattet sind, in die sich der Haken (203) einschieben kann.

8. Vorrichtung gemäß Anspruch 7, dadurch gekennzeichnet, daß der Haken (203) von zumindest einem flachen Stück (2032) gebildet ist, das eine Aussparung in einem Mittelbereich (2030) aufweist, daß der Federriegel (212) einen mittleren Vorsprung (2123) aufweist, der mit einem facettierten Vorderbereich (21230) und zwei Seitenflügeln (2122, 2123) ausgestattet ist, die auf einem Ende der elastischen Einrichtungen (2115, 2116) ruhen, deren anderes Ende auf mit dem Gehäuse einstückigen Trägern (2113, 2114) ruht, daß der Haken (203) während der Verrastung der ersten (20) und zweiten (20) Befestigungseinrichtungen derart auf diesen facettierten Bereich (21230) drückt, daß in einem ersten Schritt die Senkung des vorspringenden Mittelbereiches (2123) und das Zusammendrücken der elastischen Einrichtungen (2124, 2126) und in einem zweiten Schritt die Verriegelung des Hakens (203) im Inneren der zweiten Befestigungseinrichtungen (21) durch Einschieben des Mittelvorsprungs (2123) in die mittlere Aussparung (2030) bewirkt wird, wobei der Federriegel (212) von den elastischen Einrichtungen (2124, 2126) zurückgedrückt wird.

9. Befestigungsvorrichtung gemäß Anspruch 8, dadurch gekennzeichnet, daß die elastischen Einrichtungen von zylindrischen Schraubenfedern (2124, 2126) gebildet sind, und daß die mit dem Gehäuse einstückigen Träger von Rippen (2113 und 2114) gebildet sind, die im Inneren der Schalen (210, 211), die das Gehäuse bilden, ausgeführt sind.

10. Befestigungsvorrichtung gemäß Anspruch 1, dadurch gekennzeichnet, daß die zweiten Befestigungseinrichtungen (21) eine Diebstahlsicherung mit Schlüssel (215) aufweisen, die den Federriegel (212) blockiert.

11. Radhalter (3), dadurch gekennzeichnet, daß er eine Befestigungseinrichtung (2) gemäß irgendeinem der Ansprüche 1 bis 10 aufweist.

12. Radhalter (3) gemäß Anspruch 11, dadurch gekennzeichnet, daß er ein verlängertes Trageelement (31) in Form eines Balkens aufweist, auf dem das Rad (1) ruht, daß die Tragestruktur von zwei eine Gabel bildenden Rohren (30) gebildet ist, wobei sie an einem Ende die zweiten Befestigungseinrichtungen (21) trägt und an ihrem anderen Ende um eine Achse (Δ) beweglich ist, die senkrecht zu dem größten Ausmaß des verlängerten Elementes (31) liegt, und daß das verlängerte Element einen zweiten Haken (46) aufweist, auf dem der Federriegel (212) einrastet, wenn die Gabel auf das verlängerte Element (31) heruntergedrückt wird, wobei dieser zweite Haken eine mittlere Aussparung (460) aufweist.
